# FASCICULE DE BREVET EUROPEEN

(11) **EP 1 707 088 B1**
(45) Date de publication et mention de la délivrance du brevet: **20.05.2009**
(21) Numéro de dépôt: 06356033.8
(22) Date de dépôt: 21.03.2006
(51) Int. Cl.: A47J 31/40, A47J 31/36

(54) **Machine à café automatique**
Automatische Kaffeemaschine
Automatic coffee machine

(30) Priorité: 31.03.2005 FR 0503124
(43) Date de publication de la demande: 04.10.2006
(73) Titulaire: SEB S.A., 69130 Ecully (FR)
(72) Inventeur: Geroult, Marc, 72610 Oisseau-le-Petit (FR); Mih, Séverine, 72600 Mamers (FR)
(74) Mandataire: Kiehl, Hubert

(56) Documents cités:
- WO-A-99/12457
- FR-A- 2 440 720

## Description

La présente invention est relative à une machine à café automatique de boissons infusées à partir d'un dispositif distributeur de café en poudre ou d'un broyeur de grains de café.

Un appareil de préparation et distribution de boissons chaudes à base de café moulu comprend généralement un réservoir d'eau froide, une pompe électrique, un ensemble formant chaudière et une tête d'infusion apte à recevoir le café en poudre en vue de lui injecter l'eau chaude en provenance de ladite chaudière, la boisson obtenue étant ensuite orientée vers un récipient collecteur. En fin de cycle d'infusion, la tête d'infusion doit être ouverte afin de pouvoir y introduire à nouveau le produit d'infusion après avoir évacué la galette de marc de café infusée.

Un tel appareil est décrit dans le document WO 99/12457 et concerne un appareil apte à distribuer de manière automatique du café espresso à partir de poudre de café. L'appareil comprend un groupe d'infusion comportant une chambre d'infusion d'axe vertical apte à recevoir un piston presseur coulissant selon ledit axe vertical actionné par le piston d'un vérin hydraulique. Le piston du vérin hydraulique est relié au piston presseur et peut passer d'une position de repos à une position de travail dans laquelle le piston presseur est en compression dans la chambre d'infusion sous l'effet du liquide sous pression. Le passage à la position de repos se fait par un ressort de rappel, un bras éjecteur étant prévu pour évacuer la galette de marc sortant de la chambre d'infusion. L'appareil comprend également un distributeur de café en poudre provenant soit d'un magasin à poudre de café, soit d'un broyeur à café, dont l'orifice de distribution débouche dans une goulotte conduisant la mouture vers la chambre d'infusion. Fonctionnant à satisfaction, on s'est aperçu que, en utilisation, des particules de café moulu accrochées à la goulotte tombaient à côté de l'orifice d'entrée dans la chambre d'infusion et s'accumulaient à l'intérieur de la machine. Par ailleurs, lorsque la quantité de mouture dans la chambre d'infusion est trop faible, la galette de marc n'étant pas suffisamment tassée, le bras éjecteur pulvérise la galette qui se répand dans l'espace environnant. Ces phénomènes font que des bourrages de café se forment à l'intérieur de la machine, plus particulièrement autour de la tête d'infusion pouvant provoquer, à terme, des dysfonctionnements de la machine. Ceci nécessite le démontage et le nettoyage à intervalles réguliers de l'intérieur de la machine, opération qui s'avère assez fastidieuse et complexe pour la plupart des machines.

Plusieurs documents proposent des machines à café de construction modulaire et d'accès facilité à l'intérieur de la machine afin de réduire les temps d'arrêt pour réparation. Ainsi, les documents FR 2 440 720 et EP 0 299 399 proposent des machines à café dont le bâti comporte un module amovible réalisé sous la forme d'un tiroir monté coulissant sur des rails et supportant les composants de la machine. Une telle solution permet, certes, d'intervenir plus rapidement sur une machine par remplacement du module défectueux, mais elle nécessite toutefois l'intervention d'un réparateur qualifié et le démontage de certaines parties de fixation du module, voire du tiroir, tout en présentant des composants assez fragiles et des connexions complexes entre eux.

Par ailleurs, le document FR 2 780 261 qui décrit un dispositif mélangeur pour un distributeur automatique de boissons chaudes, propose une solution plus particulièrement adaptée aux produits en poudre volatile. Cette solution consiste à aménager, au-dessus d'un espace mélangeur, un couvercle muni d'un entonnoir de distribution et de chicanes qui coopèrent avec celles d'un tiroir en dessous pour piéger et capter les particules volatiles de la poudre qui s'élèvent en partie haute de l'espace mélangeur en même temps que la vapeur d'eau injectée. Le tiroir et son couvercle peuvent être enlevés et nettoyés lors d'une opération d'entretien de la machine. Toutefois, cette solution présente comme inconvénients un nombre trop important de pièces de géométrie complexe, ainsi que l'absence d'un avertissement d'encrassage et, également, celle d'un accès direct au sous-ensemble à nettoyer, le technicien de maintenance devant, lorsqu'il décide de procéder au nettoyage de la machine, d'abord démonter une partie du boîtier du distributeur automatique pour accéder à la partie à nettoyer.

Le but de la présente invention est de remédier aux inconvénients précités et de proposer une machine à café automatique apte à confectionner un café de bonne qualité, tout en étant d'un entretien particulièrement aisé pour son utilisateur.

Un autre but de l'invention est une machine à café automatique qui puisse avertir l'utilisateur qu'un nettoyage de la machine doit être réalisé et que ce dernier puisse être facilement réalisé par l'utilisateur, sans intervention d'un technicien d'entretien spécialisé en la matière.

Un autre but de l'invention est de réaliser de manière simple et peu coûteuse une machine à café automatique qui soit sûre et fiable en fonctionnement.

Ces buts sont atteints avec une machine à café automatique comprenant, à l'intérieur d'un boîtier :
- un groupe d'infusion qui comporte une chambre d'infusion apte à recevoir un piston presseur et des moyens d'actionnement en un mouvement de coulissement relatif dudit piston presseur et/ou de ladite chambre d'infusion l'un par rapport à l'autre, à partir d'une position de repos dans laquelle le piston se trouve à l'extérieur de la chambre jusqu'à une position de travail à l'intérieur de la chambre d'infusion;
- un distributeur de café moulu comportant un orifice de distribution communiquant avec une goulotte apte à canaliser le café moulu vers la chambre d'infusion,
du fait qu'un tiroir de ramassage de particules de café moulu est disposé sous ladite goulotte et couvre la périphérie de la chambre d'infusion, et qu'il est monté de manière à pouvoir être directement retiré de la machine.

Le distributeur de café moulu peut être du type comportant un réservoir qui contient la mouture de café et à l'intérieur duquel se trouve un moyeu à palettes apte à passer une certaine quantité de mouture, au travers d'un orifice de distribution, dans une goulotte qui l'achemine en proximité de la chambre d'infusion. Un tel distributeur peut également être un broyeur de grains de café qui envoie directement, au travers d'un orifice de distribution, ou par l'intermédiaire d'une chambre tampon, une certaine quantité de mouture de café dans une goulotte de transfert vers la chambre d'infusion. Une telle goulotte est un conduit qui est disposé généralement vertical ou incliné par rapport à la chambre d'infusion, de manière à ce que la mouture tombe par gravité à l'intérieur de la chambre d'infusion.

Par tiroir de ramassage on comprend une pièce agencée à l'intérieur de la machine, plus particulièrement dans la proximité de l'ouverture de la chambre d'infusion qu'il entoure ou qu'il borde, ayant des dimensions supérieures à celle-ci, de manière à pouvoir recueillir les éventuels déchets de mouture à l'entrée de la chambre d'infusion.

Par périphérie, de préférence horizontale, de la chambre d'infusion on comprend une zone plane entourant l'ouverture de la chambre d'infusion dans laquelle passe le piston et ceci sur une étendue suffisante pour limiter des chutes de mouture contournant cette chambre pour retomber en la partie inférieure du boîtier ou sur ses composants.

Selon l'invention, le tiroir de ramassage des particules ou grains de café moulu est agencé sous la goulotte, plus précisément entre son extrémité débouchant à l'entrée de la chambre d'infusion, et la chambre d'infusion. Ainsi, les grains de café moulu arrivant par la goulotte du distributeur de mouture qui ne tombent pas à l'intérieur de la chambre, mais à côté, ou qui restent sur les parois de la goulotte, voire qui arrivent par la goulotte après la fermeture de la chambre d'infusion, sont alors recueillis par le tiroir de ramassage. Un tel tiroir de ramassage est alors agencé au-dessus de la chambre d'infusion, en présentant une ouverture de passage du piston, voire, dans une variante, il peut être agencé latéralement, en bordant l'entrée dans la chambre d'infusion.

Par tiroir de ramassage monté de manière à pouvoir être directement retiré de la machine, on comprend que le tiroir peut être enlevé par l'utilisateur depuis l'extérieur de la machine, sans avoir besoin d'ouvrir le boîtier de cette dernière et sans utiliser d'outils de démontage du boîtier ou du tiroir. Ainsi, le tiroir peut présenter une partie saillante à l'extérieur du boîtier pour être saisi par l'utilisateur ou encore, un mécanisme d'éjection du tiroir peut déloger le tiroir et le dégager à l'extérieur de la machine lorsque l'utilisateur agit sur un bouton de commande placé en façade ou à l'extérieur du boîtier. Un tel tiroir de ramassage peut alors être facilement retiré par l'utilisateur en vue de son nettoyage.

Ceci permet un nettoyage aisé qui peut être réalisé par l'utilisateur lui-même et qui garantit un fonctionnement efficace et assure ainsi une longue durée de vie de la machine.

Selon l'invention également, ledit tiroir de ramassage couvre la périphérie d'un passage débouchant dans un bac à mouture.

Le tiroir de ramassage de grains de café moulu relie ainsi la sortie de la chambre d'infusion et l'entrée d'un bac à mouture, prévu pour récupérer les galettes de café infusé. Ainsi, lorsque la galette n'est pas bien tassée et qu'elle est désintégrée par l'action du bras éjecteur de la machine, les fragments résultants sont alors recueillis par le tiroir de ramassage qui communique avec le bac à mouture pour y diriger les particules de café infusé.

De préférence, le tiroir de ramassage est monté coulissant dans une fente du boîtier et est guidé en translation par un support disposé dans le boîtier.

On aurait pu, certes, envisager un tiroir de ramassage monté pivotant autour d'un axe du boîtier de la machine et actionné depuis l'extérieur ou encore un tiroir monté fixe à l'intérieur de la machine et accessible via une trappe que l'on ouvre depuis l'extérieur. On préfère toutefois, pour plus de simplicité et d'efficacité, un tiroir monté coulissant dans le boîtier et qui puisse ainsi être facilement retiré du boîtier.

De préférence, le tiroir de ramassage a une forme générale rectangulaire plane, et comprend une poignée faisant saillie par rapport au boîtier.

Un tel tiroir permet de recueillir les grains de mouture sur une surface importante, pour un faible encombrement du tiroir, tout en permettant d'être facilement retiré du boîtier par une action directe de l'utilisateur sur sa poignée.

Avantageusement selon l'invention, le tiroir de ramassage comprend un premier orifice de diamètre voisin au diamètre interne de la chambre d'infusion, le mettant en communication avec cette dernière.

Un tel tiroir est une pièce plane disposée au-dessus de l'entrée dans la chambre d'infusion et comportant un orifice qui est traversé par le piston presseur coulissant dans la chambre. Un tel orifice présente alors un diamètre légèrement supérieur à celui de la chambre d'infusion permettant au piston de traverser le tiroir, mais ne permettant pas aux grains de café moulu ou infusé de passer entre l'orifice du tiroir et les parois de la chambre d'infusion.

De préférence selon l'invention, le tiroir de ramassage comprend un deuxième orifice le mettant en communication avec le bac à mouture.

Le tiroir de ramassage de l'invention comprend un deuxième orifice permettant à un bras éjecteur qui balaye la galette de marc de la pousser dans le bac à mouture, tout en gardant dans le tiroir les éventuels fragments de galette qui n'arrivent pas à être complètement évacués dans le bac à mouture. Le premier et le deuxième orifice sont réalisés selon la configuration spécifique de la machine à café, par exemple, dans un encombrement idéal, ils peuvent être agencés dans le prolongement l'un de l'autre.

Avantageusement, la machine à café automatique comporte un témoin de mise en place du tiroir de ramassage à l'intérieur de la machine.

Ceci permet d'avoir un tiroir complètement amovible, tout en étant certain qu'il est bien remis en place afin d'assurer un fonctionnement fiable de la machine, surtout pour un tiroir qui est prévu pour être traversé par le piston presseur de la chambre d'infusion.

De préférence, le témoin est un interrupteur relié au circuit électronique de commande de la machine.

On aurait pu envisager un simple témoin visuel permettant à l'utilisateur de s'assurer de la bonne mise en place du tiroir. On préfère toutefois utiliser un interrupteur électrique qui est relié au circuit de commande de la machine, car on peut ainsi interdire le fonctionnement de la machine lorsque le tiroir n'est pas remis en place ou lorsqu'il a été remis dans une mauvaise position.

Selon un autre aspect particulièrement avantageux de l'invention, la machine à café comprend des moyens d'avertissement de nettoyage du tiroir de ramassage reliés audit témoin ou audit interrupteur.

Ceci permet de déclencher, soit un compteur de nombre de cycles de fonctionnement de la machine, soit une horloge interne de cette dernière afin d'avertir l'utilisateur, à l'issue d'un certain nombre de cycles ou après une période de temps de fonctionnement, que le tiroir de ramassage doit être retiré et nettoyé.

De préférence, le support est solidaire de la chambre d'infusion et porte l'interrupteur.

Un tel support est fixé à la chambre d'infusion et assure, à la fois, la présence du tiroir dans la proximité de la chambre, ainsi que le guidage et la bonne mise en place du tiroir à l'intérieur de la machine.

Avantageusement, l'interrupteur est actionné par le tiroir de ramassage lorsqu'il arrive en butée dans le support à l'intérieur de la machine.

Le tiroir de ramassage, arrivant en butée dans le support de guidage à l'intérieur de la machine, déclenche l'interrupteur supporté par cette dernière. Une telle solution permet d'avoir la certitude d'une bonne mise en place du tiroir et, en même temps, de provoquer le déclenchement du comptage du nombre de cycles de fonctionnement de la machine qui détermine le besoin ultérieur de nettoyage de son tiroir de ramassage.

L'invention sera mieux comprise à l'étude des modes de réalisation pris à titre nullement limitatif et illustrés dans les figures annexées dans lesquelles :
- la figure 1 est une vue en perspective d'une machine à café automatique de l'invention;
- la figure 2 est une vue en perspective d'une machine à café automatique selon l'invention, mais où certaines parois du boîtier extérieur et certains composants sont enlevés;
- la figure 3 est une vue en perspective d'un sous-ensemble de support de tiroir de ramassage de l'invention;
- la figure 4 est une vue en perspective d'un tiroir de ramassage de l'invention.

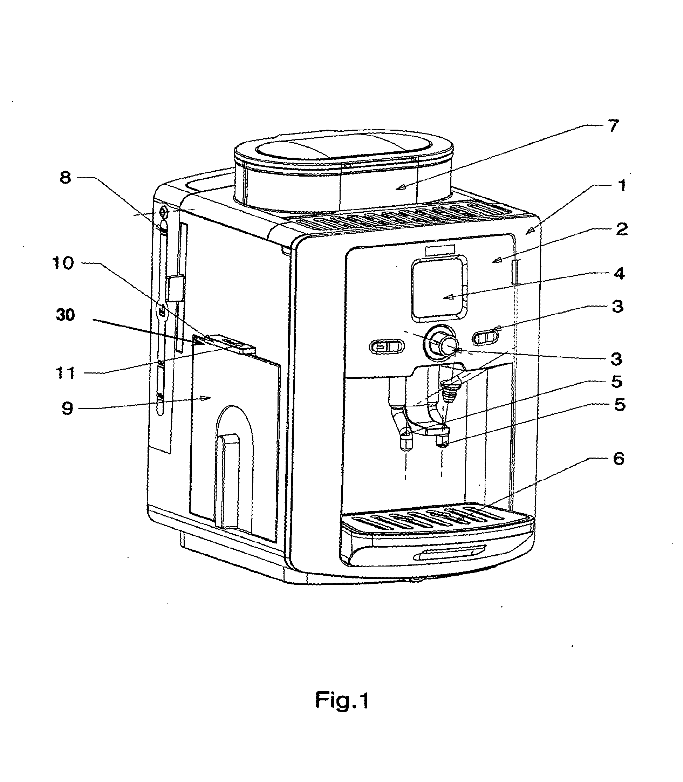

La machine à café automatique de l'invention est apte à confectionner un café espresso et, tel que représenté à la figure 1, elle comprend un boîtier 1 de forme générale parallélépipédique qui renferme les principaux éléments fonctionnels de la machine. Le boîtier 1 présente une façade comprenant un tableau de commande 2 constitué d'une série de boutons 3 agissant sur le circuit électronique de contrôle de la machine et d'un afficheur 4. La boisson confectionnée par la machine s'écoule par des tubulures de sortie 5 dans une tasse (non représentée) placée sur un support 6. Un réservoir de grains de café 7 est disposé en partie supérieure du boîtier 1 et un réservoir d'eau 8 en sa partie arrière. Sur l'un des côtés latéraux du boîtier est agencé un bac à mouture 9 destiné à recevoir les galettes de mouture usagées en provenance de la chambre d'infusion de la machine.

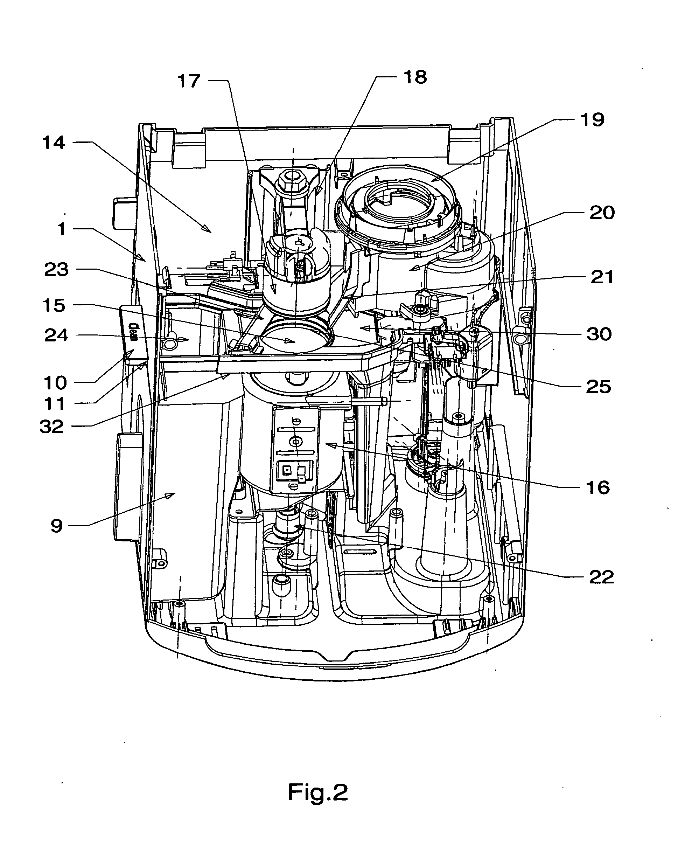

La figure 2 représente la même machine de la figure 1, mais où les parois du boîtier ont été en partie enlevées, ainsi que certains de ses composants afin de pouvoir plus facilement identifier les principaux éléments fonctionnels de la machine. On remarque sur la figure 2 un groupe d'infusion 14 comportant une chambre d'infusion 15 en forme de cuve cylindrique apte à recevoir une certaine quantité de café moulu au-dessus d'une paroi inférieure formant filtre pour la mouture. La chambre d'infusion 15 est montée fixe au-dessus d'un bloc thermique 16, d'axe vertical, dont elle constitue le prolongement. Le bloc thermique 16 renferme un circuit d'eau et un élément chauffant électrique non représentés, mais qui peuvent être réalisés selon la description du document WO 99/12456. Le bloc thermique 16 assure l'alimentation en eau chaude de la, chambre d'infusion 15.

La chambre d'infusion 15 reçoit un piston presseur 17 qui coulisse verticalement et de manière étanche dans la chambre d'infusion 15 pour compacter la mouture. L'appareil comprend par ailleurs des moyens d'actionnement 18 du piston presseur 17 qui sont constitués, dans l'exemple représenté, par un vérin hydraulique comportant un piston interne relié au piston presseur 17 par une barre intermédiaire rigide. Le vérin hydraulique reçoit un liquide sous pression en provenance d'un circuit hydraulique de l'appareil, liquide qui déplace le piston du vérin vers le bas en même temps que le piston presseur 17 qui passe alors d'une position de repos (en partie supérieure de l'appareil) à une position de travail, en descendant verticalement en direction de la chambre d'infusion 15 pour comprimer la mouture. L'eau chaude est alors envoyée à travers la mouture et la boisson infusée est ensuite évacuée au travers du piston presseur 17, via un canal interne de ce dernier prolongé par un conduit et des tubulures de sortie 5 qui orientent la boisson vers l'extérieur où elle est recueillie dans une tasse. Le vérin hydraulique ici décrit est un vérin à simple effet, le rappel en position de repos du piston du vérin étant réalisé par un ressort situé en partie inférieure du vérin hydraulique. Un tel vérin est décrit plus en détail dans le document WO 99/12457.

L'appareil comporte également un distributeur de mouture 19 qui comprend, dans l'exemple représenté aux figures 1 et 2, un réservoir de grains de café 7 et un broyeur 20 de grains de café. Les grains de café tombent à l'intérieur du broyeur 20 ou moulin qui comprend généralement un arbre entraîné en rotation par un moteur électrique pour actionner une meule tournante opposée à une meule fixe, le café en grains étant introduit entre ces meules pour sortir à l'état moulu par un orifice de distribution à travers lequel il passe dans une goulotte 21. La goulotte 21 a une forme générale de tremplin incliné par rapport à la verticale et est évasée en sa partie inférieure située au-dessus de la chambre d'infusion 15, la partie supérieure de la goulotte communiquant avec la sortie du broyeur.

En fin de cycle de préparation d'infusion, la galette de marc présente dans la chambre d'infusion est poussée en la partie supérieure de la chambre par la tige d'un éjecteur 22 qui traverse le bloc thermique 16. Un bras de raclage 23 est ensuite commandé par un mécanisme de la machine pour balayer la galette de marc au-dessus de la chambre d'infusion 15 et la pousser vers le passage 24 débouchant dans un bac à mouture 9 qui stocke les galettes usagées.

Selon l'invention, un tiroir de ramassage 30 est agencé entre la chambre d'infusion 15, notamment juste au-dessus, bordant son orifice d'entrée 25, et l'extrémité inférieure de la goulotte 21. Le tiroir de ramassage 30 est monté coulissant à l'intérieur du boîtier 1 de la machine, notamment au sein d'un sous ensemble support 32 qui est, lui, monté fixe sur la chambre d'infusion 15 et par rapport au boîtier 1.

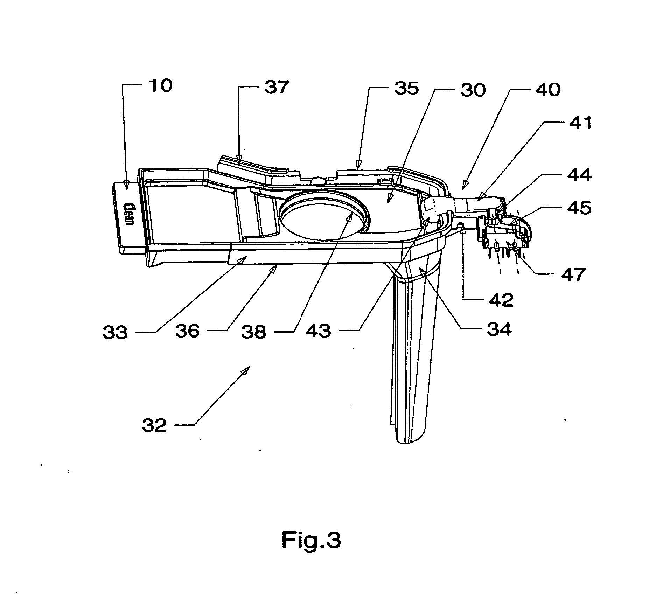

Le sous-ensemble support 32 est mieux visible à la figure 3. Il comporte un cadre 33 s'étendant dans un plan horizontal qui se prolonge sur un côté par un entonnoir 34 vertical de trop plein de mouture communiquant avec un bac de récupération en dessous. Le rebord du cadre 33 comporte des parois d'orientation et de guidage du tiroir de ramassage 30. Ainsi, les deux parois longitudinales 35, 36 parallèles du cadre 33 assurent le guidage en translation du tiroir 30 lors de son mouvement relatif sur un côté du cadre 33. Sur un côté du cadre 33, dans le prolongement de la paroi longitudinale 35, est réalisée une paroi évasée 37 qui constitue un organe détrompeur assurant l'insertion du tiroir 30 dans la bonne position. Le cadre 33 présente un orifice traversant 38 ayant un diamètre légèrement supérieur au diamètre intérieur de la chambre d'infusion 15 sur laquelle est fixé le cadre 33, par exemple par des vis de fixation situées de part et d'autre de l'orifice traversant 38.

Le cadre 33 supporte, à son extrémité opposée à celle d'introduction du tiroir, un dispositif détecteur de présence 40 du tiroir de ramassage 30. Ce dispositif comprend une bascule 41 montée pivotante autour d'un axe 42 appartenant au cadre 33. La bascule présente une extrémité avant 43 biaisée poussée vers le bas par l'action d'un ressort de compression situé à l'arrière de la bascule 41, entre cette dernière et le corps du cadre 33. Lorsque le tiroir de ramassage 30 est inséré et arrive en butée au sein du cadre 33, il pousse vers le haut l'extrémité avant 43 de la bascule 41 et la fait pivoter de manière à ce que son extrémité arrière 44 vient appuyer, via un levier 45, sur un contact d'un interrupteur 47. L'interrupteur 47 est relié au circuit électronique de commande de la machine qui est alors informé de la présence du tiroir à l'intérieur de la machine.

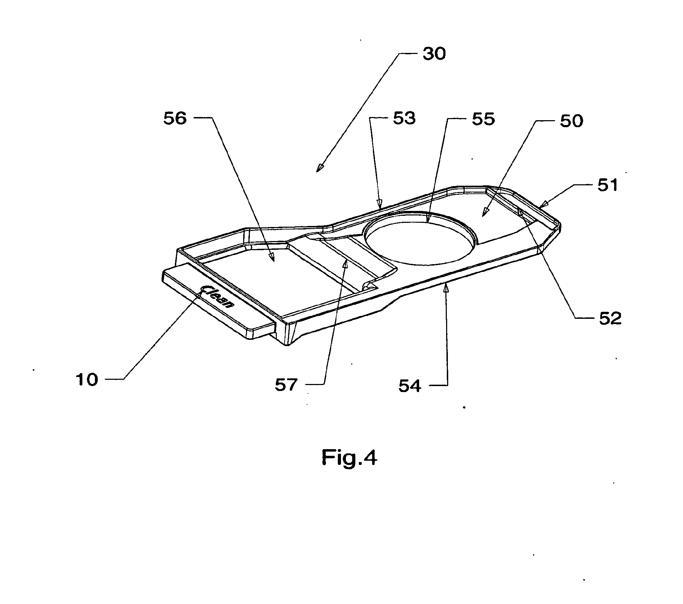

Le tiroir de ramassage 30 est mieux visible à la figure 4. Celui-ci a une forme générale rectangulaire plane, et comporte des rebords situés au même niveau, ainsi qu'une paroi de fond 50 en creux qui forme un réceptacle pour les grains de mouture. Le tiroir de ramassage 30 comporte, à l'une de ses extrémités, une poignée 10 et, à son extrémité opposée, une pointe 51 destinée à coopérer avec l'extrémité avant 43 de la bascule 41, laquelle extrémité avant vient en butée contre une nervure 52 formée sur la paroi de fond 50 du tiroir lors de la mise en place de ce dernier à l'intérieur du cadre 33. Lors de sa mise en place, les parois longitudinales 53, 54 du tiroir de ramassage 30 sont guidées en coulissement par les parois longitudinales 35, 36 du cadre 33. Le tiroir de ramassage 30 comporte par ailleurs un premier orifice 55 de dimensions légèrement supérieures à l'orifice traversant 38 du cadre 33 et donc du diamètre intérieur de la chambre d'infusion 15. Un deuxième orifice 56 se trouve dans le prolongement du premier en direction de la poignée 10 et permet au tiroir de ramassage 30 de communiquer avec le bac à mouture 9 en dessous. Un tremplin 57 est situé entre les deux orifices 55 et 56 pour permettre à la galette de mouture balayée par le bras éjecteur 23 de glisser aisément vers le bac à mouture 9.

Lors de la mise en marche de la machine à café, le distributeur de café moulu 19 verse par la goulotte 21 une quantité prédéterminée de poudre de café, correspondant à un temps de fonctionnement prédéterminé du broyeur 20, pour l'obtention de la quantité de boisson voulue dans la chambre d'infusion 15. Le piston presseur 17 descend à l'intérieur de la chambre d'infusion 15 et comprime la mouture. L'eau chaude sous pression arrive ensuite dans la chambre 15 en traversant le bloc thermique 16 et la boisson obtenue passe à travers le corps du piston presseur 17 et s'écoule par les tubulures de sortie 5 dans une tasse à l'extérieur de la machine, tel que mieux décrit dans le document WO 99/12456. A la fin du cycle d'infusion, le piston presseur 17 retourne en sa position haute, l'éjecteur 22 remonte la galette de marc, depuis la chambre d'infusion jusqu'au niveau du tiroir de ramassage 30, à travers son premier orifice 55, d'où un bras de raclage 23 la pousse dans un bac à mouture 9 par le deuxième orifice 56 du tiroir. Un nouveau cycle peut alors recommencer.

Après un certain nombre de cycles de fonctionnement qui sont estimés par un compteur intégré au niveau du logiciel implémenté dans l'unité de commande du circuit électronique de la machine, l'afficheur 4 (ou, dans une variante, un voyant lumineux spécifique du panneau de commande 2) informe l'utilisateur que le tiroir de ramassage 30 doit être nettoyé. L'utilisateur saisit alors la poignée 10 du tiroir de ramassage 30 et le retire par translation à l'extérieur de la machine. A partir de ce moment, le système de comptage du nombre de cycles est réinitialisé et le message d'avertissement de nettoyage disparaît (ou le voyant lumineux s'éteint). L'utilisateur secoue le tiroir pour enlever l'excédent de mouture ou le nettoie en le passant sous l'eau. Une fois nettoyé, le tiroir est replacé à l'intérieur de la machine en le faisant glisser via une fente 11 du boîtier 1 au sein du cadre 33 à l'intérieur de la machine. Lorsque le tiroir de ramassage 30 est bien remis en place, le détecteur de présence 40 informe le circuit électronique et l'utilisateur peut alors remettre en marche la machine à café et commander un nouveau cycle.

Pour des raisons de sécurité, le circuit électronique de commande de l'appareil n'autorise pas le fonctionnement de la machine si le tiroir n'est pas en place ou s'il est mal placé dans le boîtier.

De la même manière, si l'utilisateur ne retire pas le tiroir au moment où la machine le demande, la machine ne peut pas fonctionner.

Une telle solution présente l'avantage d'être simple, peu coûteuse et d'avertir l'utilisateur de la fréquence de nettoyage et augmente la durée de vie de la machine à café.

D'autres variantes et modes de réalisation de l'invention peuvent être envisagés sans sortir du cadre de ces revendications.

Ainsi, dans une variante plus complexe, le tiroir de ramassage peut être réalisé en une même pièce avec le bac à mouture et bénéficier d'une même fréquence de nettoyage que ce dernier.

## Revendications

1. Machine à café automatique comprenant, à l'intérieur d'un boîtier (1) :
- un groupe d'infusion (14) qui comporte une chambre d'infusion (15) apte à recevoir un piston presseur (17) et des moyens d'actionnement (18) en un mouvement de coulissement relatif dudit piston presseur (17) et/ou de ladite chambre d'infusion (15) l'un par rapport à l'autre, à partir d'une position de repos dans laquelle le piston se trouve à l'extérieur de la chambre jusqu'à une position de travail à l'intérieur de la chambre d'infusion;
- un distributeur (19) de café moulu comportant un orifice (16) de distribution communiquant avec une goulotte (21) apte à canaliser le café moulu vers la chambre d'infusion (15),
**caractérisée en ce qu'**un tiroir de ramassage (30) de particules de café moulu est disposé sous ladite goulotte (21) et couvre la périphérie de la chambre d'infusion (15), et **en ce qu'**il est monté de manière à pouvoir être directement retiré de la machine.

2. Machine à café selon la revendication 1, **caractérisée en ce que** ledit tiroir de ramassage (30) couvre la périphérie d'un passage (24) débouchant dans un bac à mouture (9).

3. Machine à café selon l'une des revendications 1 ou 2, **caractérisée en ce que** ledit tiroir de ramassage (30) est monté coulissant dans une fente (11) du boîtier (1) et est guidé en translation par un support (32) disposé dans le boîtier (1).

4. Machine à café selon l'une des revendications précédentes, **caractérisée en ce que** ledit tiroir de ramassage (30) a une forme générale rectangulaire plane et comprend une poignée (10) faisant saillie par rapport au boîtier (1).

5. Machine à café selon l'une des revendications précédentes, **caractérisée en ce que** ledit tiroir de ramassage (30) comprend un premier orifice (55) de diamètre voisin au diamètre intérieur de la chambre d'infusion (15), le mettant en communication avec cette dernière.

6. Machine à café selon l'une des revendications 2 à 5, **caractérisée en ce que** ledit tiroir de ramassage (30) comprend un deuxième orifice (56) le mettant en communication avec le bac à mouture (9).

7. Machine à café selon l'une des revendications précédentes, **caractérisée en ce qu'**elle comporte un témoin de mise en place du tiroir de ramassage (30) à l'intérieur de la machine.

8. Machine à café selon la revendication 7, **caractérisée en ce que** ledit témoin est un interrupteur (47) relié au circuit électronique de commande de la machine.

9. Machine à café selon l'une des revendications 7 ou 8, **caractérisée en ce qu'**elle comprend des moyens d'avertissement de nettoyage du tiroir de ramassage (30) reliés audit témoin ou audit interrupteur (47).

10. Machine à café selon l'une des revendications 3 à 9, **caractérisée en ce que** le support (32) est solidaire de la chambre d'infusion (15) et porte l'interrupteur (47).

11. Machine à café selon la revendication 10, **caractérisée en ce que** l'interrupteur (47) est actionné par le tiroir de ramassage (30) lorsqu'il arrive en butée dans le support (32) à l'intérieur de la machine.

## Claims

1. An automatic coffee machine that, inside a housing (1), comprises:
· a brewing unit (14) including a brewing chamber (15) suitable for receiving a presser piston (17) and actuator means (18) for causing said pressure piston (17) and/or said brewing chamber (15) to slide relative to each other from a rest position in which the piston is situated outside the chamber to a working position inside the brewing chamber;
· a ground coffee dispenser (19) provided with a dispensing orifice (16) communicating with a chute (21) suitable for channeling the ground coffee towards the brewing chamber (15);
said automatic coffee machine being **characterized in that** a collection drawer (30) for collecting ground coffee particles is disposed under said chute (21) and covers the periphery of the brewing chamber (15), and **in that** said collection drawer is mounted in such a manner as to be directly removable from the machine.

2. A coffee machine according to claim 1, **characterized in that** said collection drawer (30) covers the periphery of a passage (24) opening out into a grinds bin (9).

3. A coffee machine according to claim 1 or claim 2, **characterized in that** said collection drawer (30) is mounted to slide in a slot (11) in the housing (1) and is guided in translation by a support (32) disposed in the housing (1).

4. A coffee machine according to any preceding claim, **characterized in that** the general shape of said collection drawer (30) is that of a plane rectangle, and said collection drawer is provided with a handle (10) that projects relative to the housing (1).

5. A coffee machine according to any preceding claim, **characterized in that** said collection drawer (30) is provided with a first orifice (55) that is of diameter close to the inside diameter of the brewing chamber (15) and that puts said drawer into communication with said brewing chamber.

6. A coffee machine according to any one of claims 2 to 5, **characterized in that** said collection drawer (30) is provided with a second orifice (56) that puts it into communication with the grinds bin (9).

7. A coffee machine according to any preceding claim, **characterized in that** it is provided with an indicator indicating that the collection drawer (30) is in place inside the machine.

8. A coffee machine according to claim 7, **characterized in that** said indicator is a switch (47) connected to the electronic control circuit for controlling the machine.

9. A coffee machine according to claim 7 or claim 8, **characterized in that** it is provided with warning means for warning that the collection drawer (30) needs cleaning, which means are connected to said indicator or to said switch (47).

10. A coffee machine according to any one of claims 3 to 9, **characterized in that** the support (32) is secured to or integral with the brewing chamber (15) and carries the switch (47).

11. A coffee machine according to claim 10, **characterized in that** the switch (47) is actuated by the collection drawer (30) when said drawer comes into abutment in the support (32) inside the machine.

## Patentansprüche

1. Automatische Kaffeemaschine, die innerhalb eines Gehäuses (1) folgendes enthält:
- eine Brühbaugruppe (14), die eine Brühkammer (15) aufweist, welche einen Druckkolben (17) aufnehmen kann, und Mittel zum Betätigen (18) des Druckkolbens (17) und/oder der Brühkammer (17) in einer relativen Gleitbewegung zueinander von einer Ruhestellung, in welcher sich der Kolben außerhalb der Kammer befindet, bis zu einer Arbeitsstellung innerhalb der Brühkammer;
- einen Verteiler (19) von gemahlenem Kaffee, der eine Verteilungsöffnung (16) aufweist, die mit einer Rinne (21) verbunden ist, die den gemahlenen Kaffee zur Brühkammer (15) kanalisieren kann,
**dadurch gekennzeichnet, dass** unter der Rinne (21) eine Schublade (30) zum Sammeln von Partikeln von gemahlenem Kaffee angeordnet ist und den Umfang der Brühkammer (15) abdeckt, und dass sie so angebracht, dass sie direkt aus der Maschine herausgezogen werden kann.

2. Kaffeemaschine nach Anspruch 1, **dadurch gekennzeichnet, dass** die Sammelschublade (30) den Umfang eines Durchgangs (24) abdeckt, der in eine Mahlgutwanne (9) mündet.

3. Kaffeemaschine nach einem der Ansprüche 1 oder 2, **dadurch gekennzeichnet, dass** die Sammelschublade (30) in einem Schlitz (11) des Gehäuses (1) gleitend angebracht ist und von einem im Gehäuse (1) angeordneten Träger (32) translatorisch geführt ist.

4. Kaffeemaschine nach einem der vorhergehenden Ansprüche, **dadurch gekennzeichnet, dass** die Sammelschublade (30) eine im Allgemeinen rechteckige ebene Form hat und einen Griff (10) aufweist, der bezüglich des Gehäuses (1) absteht.

5. Kaffeemaschine nach einem der vorhergehenden Ansprüche, **dadurch gekennzeichnet, dass** die Sammelschublade (30) eine erste Öffnung (55) aufweist, deren Durchmesser dem Innendurchmesser der Brühkammer (15) angrenzend ist und die sie mit Letzterer verbindet.

6. Kaffeemaschine nach einem der Ansprüche 2 bis 5, **dadurch gekennzeichnet, dass** die Sammelschublade (30) eine zweite Öffnung (56) aufweist, die sie mit der Mahlgutwanne (9) verbindet.

7. Kaffeemaschine nach einem der vorhergehenden Ansprüche, **dadurch gekennzeichnet, dass** sie eine Kontrollleuchte für das Einsetzen der Sammelschublade (30) innerhalb der Maschine aufweist.

8. Kaffeemaschine nach Anspruch 7, **dadurch gekennzeichnet, dass** die Kontrollleuchte ein Schalter (47) ist, der mit dem elektronischen Steuerkreis der Maschine verbunden ist.

9. Kaffeemaschine nach einem der Ansprüche 7 oder 8, **dadurch gekennzeichnet, dass** sie Mittel zum Melden der Reinigung der Sammelschublade (30) aufweist, die mit der Kontrollleuchte oder dem Schalter (47) verbunden sind.

10. Kaffeemaschine nach einem der Ansprüche 3 bis 9, **dadurch gekennzeichnet, dass** der Träger (32) mit der Brühkammer (15) fest verbunden ist und den Schalter (47) trägt.

11. Kaffeemaschine nach Anspruch 10, **dadurch gekennzeichnet, dass** der Schalter (47) durch die Sammelschublade (30) betätigt wird, wenn er im Träger (32) innerhalb der Maschine im Anschlag gelangt.
